# EUROPÄISCHE PATENTANMELDUNG

(11) **EP 3 731 385 A1**
(43) Veröffentlichungstag der Anmeldung: **28.10.2020**
(21) Anmeldenummer: 19170867.6
(22) Anmeldetag: 24.04.2019
(51) Int. Cl.: H02K 11/33, H02K 9/06, H02K 11/21, H02K 3/50

(54) **VERBESSERTE ANORDNUNG EINER MOTOR-UMRICHTER-EINHEIT**

(71) Anmelder: Siemens Aktiengesellschaft, 80333 München (DE)
(72) Erfinder: Deeg, Christian, 90518 Altdorf (DE); Kuhn, Harald, 90491 Nürnberg (DE); Köllensperger, Peter, 90425 Nürnberg (DE); Maul, Christian, 90489 Nürnberg (DE); Tischmacher, Hans, 91207 Lauf (DE)

(57) **Zusammenfassung**

Eine Maschinenanordnung weist eine elektrische Maschine (1) auf, die einen Rotor (2) und einen Stator (3) aufweist. Der Rotor (2) ist drehfest auf einer Rotorwelle (4) angeordnet, die um eine Rotationsachse (6) rotierbar ist. Der Stator (3) weist ein Statorwicklungssystem (7) auf, das an einem axialen Ende der elektrischen Maschine (1) maschinenseitige Anschlüsse (8) zum Zuführen von Betriebsströmen zum Statorwicklungssystem (7) aufweist. Die Maschinenanordnung weist weiterhin einen Umrichter (9) auf, der umrichterseitige Anschlüsse (10) aufweist. Die maschinenseitigen Anschlüsse (8) und die umrichterseitigen Anschlüsse (10) sind elektrisch miteinander verbunden. Der Umrichter (9) ist an demjenigen axialen Ende der elektrischen Maschine (1) angeordnet, an dem das Statorwicklungssystem (7) die maschinenseitigen Anschlüsse (8) aufweist.

## Beschreibung

Die vorliegende Erfindung geht aus von einer Maschinenanordnung,
- wobei die Maschinenanordnung eine elektrische Maschine aufweist,
- wobei die elektrische Maschine einen Rotor und einen Stator aufweist,
- wobei der Rotor drehfest auf einer Rotorwelle angeordnet ist und die Rotorwelle um eine Rotationsachse rotierbar ist,
- wobei der Stator ein Statorwicklungssystem aufweist,
- wobei das Statorwicklungssystem an einem axialen Ende der elektrischen Maschine maschinenseitige Anschlüsse zum Zuführen von Betriebsströmen zum Statorwicklungssystem aufweist,
- wobei die Maschinenanordnung einen Umrichter aufweist, der umrichterseitige Anschlüsse aufweist,
- wobei die maschinenseitigen Anschlüsse und die umrichterseitigen Anschlüsse elektrisch miteinander verbunden sind.

Derartige Maschinenanordnungen sind allgemein bekannt.

Umrichtergespeiste und damit drehzahlveränderbar betreibbare elektrische Maschinen finden immer größere Verbreitung. Der Vorteil der Möglichkeit, die Drehzahl der elektrischen Maschine zu verändern, besteht insbesondere in einer verbesserten Prozesssteuerung und einer besseren Energieeffizienz. Beispielsweise kann bei einer Anwendung zum Treiben einer Pumpe eine verlustreiche Steuerung einer Drosselklappe durch eine entsprechende Anpassung der Drehzahl der elektrischen Maschine ersetzt werden.

In der Regel sind der Umrichter und die elektrische Maschine räumlich getrennte Einheiten. Die Energieübertragung vom Umrichter zur elektrischen Maschine erfolgt über eine entsprechende Verkabelung. Bei niedrigen und mittleren Leistungen bis ca. 100kW ist es auch schon bekannt, den Umrichter direkt an der elektrischen Maschine anzuordnen. Die elektrische Maschine und der Umrichter bilden somit eine Baueinheit, bei der die Leistungsverkabelung integriert ist und das Gesamtsystem gut aufeinander abgestimmt werden kann. Der Endanwender erhält eine drehzahlveränderbare Antriebseinheit, die er nur noch mit dem Versorgungsnetz verbinden muss.

Im Falle einer derartigen Baueinheit wird der Umrichter in der Regel auf den Klemmenkasten aufgesetzt oder im Klemmenkasten angeordnet. Der Klemmenkasten ist eine Einheit, die - bei waagrechter Orientierung der Rotationsachse - in der Regel oben auf die elektrische Maschine aufgesetzt ist. Dadurch muss innerhalb der elektrischen Maschine immer noch eine relativ lange Verkabelung umständlich vom Klemmenkasten zu demjenigen axialen Ende der elektrischen Maschine geführt werden, an dem das Statorwicklungssystem die maschinenseitigen Anschlüsse aufweist.

Die Aufgabe der vorliegenden Erfindung besteht darin, eine verbesserte und vereinfachte Maschinenanordnung zu schaffen, bei der das umständliche Führen der Verkabelung vom Klemmenkasten zu demjenigen axialen Ende der elektrischen Maschine, an dem das Statorwicklungssystem die maschinenseitigen Anschlüsse aufweist, entfallen kann.

Die Aufgabe wird durch eine Maschinenanordnung mit den Merkmalen des Anspruchs 1 gelöst. Vorteilhafte Ausgestaltungen der Maschinenanordnung sind Gegenstand der abhängigen Ansprüche 2 bis 14.

Erfindungsgemäß wird eine Maschinenanordnung der eingangs genannten Art dadurch ausgestaltet, dass der Umrichter an demjenigen axialen Ende der elektrischen Maschine angeordnet ist, an dem das Statorwicklungssystem die maschinenseitigen Anschlüsse aufweist.

Der Begriff "an demjenigen axialen Ende der elektrischen Maschine angeordnet ist, an dem das Statorwicklungssystem die maschinenseitigen Anschlüsse aufweist" soll hierbei nicht bedeuten, dass der Umrichter "mit Luft" an dem entsprechenden axialen Ende angeordnet ist. Vielmehr soll der Begriff bedeuten, dass entweder der Umrichter direkt an das entsprechende axiale Ende der elektrischen Maschine angrenzt oder - falls zwischen dem entsprechenden axialen Ende der elektrischen Maschine und dem Umrichter ausnahmsweise ein weiteres Element der Maschinenanordnung angeordnet ist - der Umrichter direkt an dieses weitere Element angrenzt und das weitere Element der Maschinenanordnung direkt an das entsprechende axiale Ende der elektrischen Maschine angrenzt.

Weiterhin bezeichnet der Begriff "Umrichter" diejenige Einheit, welche die elektronischen Schaltelemente aufweist, welche die dem Statorwicklungssystem zugeführten Betriebsströme schalten. Vorzugsweise weist diese Einheit auch den elektronischen Schaltelementen vorgeordnete Elemente auf, beispielsweise Kondensatorelemente und/oder Gleichrichterelemente. Zwingend ist dies aber nicht erforderlich. Zwingend sind nur die elektronischen Schaltelemente vorhanden.

Durch diese Gestaltung wird erreicht, dass Verbindungsleitungen von den umrichterseitigen Anschlüssen zu den maschinenseitigen Anschlüssen sehr kurz und einfach geführt werden können.

In aller Regel sind die maschinenseitigen Anschlüsse gleichmäßig um die Rotationsachse herum verteilt angeordnet und sind weiterhin auch die umrichterseitigen Anschlüsse gleichmäßig um die Rotationsachse herum verteilt angeordnet. Dadurch kann eine 1:1-Verbindung mit vollständig oder zumindest nahezu rein axial verlaufenden Verbindungsleitungen erfolgen.

Vorzugsweise weist der Umrichter eine Mittenausnehmung für den Durchtritt der Rotorwelle auf. Dadurch behindert der Umrichter nicht die Rotorwelle.

Die elektrische Maschine kann nach Bedarf ausgebildet sein. Vorzugsweise ist sie jedoch als permanenterregte Synchronmaschine, als Induktionsmaschine oder als Reluktanzmaschine ausgebildet.

In vielen Fällen weist die Maschinenanordnung einen Lüfter mit einem Lüfterrad auf. In diesem Fall ist vorzugsweise der Lüfter ebenfalls an demjenigen axialen Ende der elektrischen Maschine angeordnet, an dem das Statorwicklungssystem die maschinenseitigen Anschlüsse aufweist. Der Lüfter kann - im Einzelfall - ein weiteres Element der Maschinenanordnung sein, das zwischen dem Umrichter und der elektrischen Maschine angeordnet ist. In der Regel ist jedoch umgekehrt der Umrichter zwischen der elektrischen Maschine und dem Lüfter angeordnet. In beiden Fällen grenzen die elektrische Maschine, der Umrichter und der Lüfter in Richtung der Rotationsachse gesehen jedoch unmittelbar aneinander an.

Falls ein Lüfter mit einem Lüfterrad vorhanden ist, ist es möglich,
- dass die Maschinenanordnung einen Sensor und eine von dem Sensor abgetastete Maßverkörperung aufweist, so dass aufgrund eines von dem Sensor abgegebenen Sensorsignals eine Drehzahl der Rotorwelle ermittelbar ist,
- dass der Umrichter eine Umrichterschaltung und ein Umrichtergehäuse aufweist,
- dass sowohl die Umrichterschaltung als auch der Sensor im Umrichtergehäuse angeordnet sind,
- dass das Lüfterrad drehfest mit der Rotorwelle verbunden ist und
- dass die Maßverkörperung auf dem Lüfterrad angeordnet ist.

Dadurch kann auf relativ einfache Weise die Drehzahl der Rotorwelle ermittelt werden. Hierbei ist es möglich, dass mittels des Sensors die Drehzahl selbst erfasst wird. Es ist auch möglich, dass mittels des Sensors die Drehstellung erfasst wird und daraus durch zeitliche Ableitung die Drehzahl ermittelt wird.

Alternativ ist es möglich,
- dass die Maschinenanordnung einen Sensor und eine von dem Sensor abgetastete Maßverkörperung aufweist, so dass aufgrund eines von dem Sensor abgegebenen Sensorsignals zumindest eine Drehzahl der Rotorwelle ermittelbar ist,
- dass der Umrichter eine Umrichterschaltung und ein Umrichtergehäuse aufweist,
- dass sowohl die Umrichterschaltung als auch der Sensor im Umrichtergehäuse angeordnet sind und
- dass die Maßverkörperung auf der Rotorwelle angeordnet ist.

Diese Ausgestaltung ist im Unterschied zur Anordnung der Maßverkörperung auf dem Lüfterrad unabhängig davon realisierbar, ob das Lüfterrad vorhanden ist oder nicht. Im übrigen gelten die Ausführungen, die obenstehend in Verbindung mit einer Anordnung der Maßverkörperung auf dem Lüfterrad getroffen sind.

In der Regel weist die Maßverkörperung um die Rotationsachse herum gesehen mehrere Verkörperungselemente auf. In diesem Fall ist es möglich, dass die Verkörperungselemente erhaben ausgebildet sind und spiralförmig um die Rotationsachse umlaufen. Dadurch können die Verkörperungselemente insbesondere in dem Fall, dass die Drehrichtung der elektrischen Maschine stets dieselbe ist, derart um die Rotationsachse umlaufen, dass sie den Luftstrom aktiv zur elektrischen Maschine fördern bzw. einen derartigen Luftstrom unterstützen.

Die Maßverkörperung weist um die Rotationsachse herum gesehen mehrere Verkörperungselemente. Hierbei ist es alternativ möglich, dass die Verkörperungselemente um die Rotationsachse herum gesehen gleichmäßig oder ungleichmäßig verteilt angeordnet sind. Im Falle einer gleichmäßigen Verteilung ist eine besonders stabile Erkennung der Drehzahl möglich. Im Falle einer ungleichmäßigen Verteilung ist - zusätzlich zur betragsmäßigen Erkennung der Drehzahl - eine Erkennung der Drehrichtung des Rotors möglich.

Vorzugsweise ist der Sensor als nach einem magnetischen Prinzip arbeitender Sensor ausgebildet. Ein nach einem magnetischen Prinzip arbeitender Sensor ist bevorzugt, weil er gegenüber Verschmutzungen und dergleichen erheblich unempfindlicher ist als ein nach einem optischen Prinzip arbeitender Sensor. In diesem Fall besteht das Umrichtergehäuse vorzugsweise zumindest im Bereich zwischen dem Sensor und der Maßverkörperung aus einem unmagnetischen Material. Ein unmagnetisches Material im Sinne der vorliegenden Erfindung ist ein diamagnetisches Material. Diamagnetische Materialien sind allgemein bekannt. Ein Beispiel eines geeigneten Materials ist ein Kunststoff.

Es ist möglich, dass die Maßverkörperung aus einem permanentmagnetischen Material besteht, das von dem Sensor abgetastet wird. Vorzugsweise ist jedoch vorgesehen,
- dass der Sensor ein Anregungselement und ein Empfangselement aufweist,
- dass die Maßverkörperung aus einem magnetisierbaren, aber nicht permanentmagnetischen Material besteht,
- dass die Maßverkörperung mittels des Anregungselementes magnetisiert wird,
- dass mittels des Empfangselements ein Empfangssignal empfangen wird und
- dass das Empfangselement das Sensorsignal anhand des Empfangssignals ermittelt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Seitenansicht einer Maschinenanordnung,
- FIG 2: einen Längsschnitt durch die Maschinenanordnung von FIG 1,
- FIG 3: einen Schnitt längs einer Linie III-III in FIG 2,
- FIG 4: eine schematische Draufsicht auf ein Anschlussende,
- FIG 5: einen Teil des Längsschnitts von FIG 2,
- FIG 6: eine zu FIG 5 alternative Ausgestaltung,
- FIG 7: eine mögliche Anordnung von Verkörperungselementen einer Maßverkörperung,
- FIG 8: eine zu FIG 7 alternative Anordnung der Verkörperungselemente,
- FIG 9: eine mögliche Ausgestaltung von FIG 6 und
- FIG 10: einen Sensor und eine Maßverkörperung.

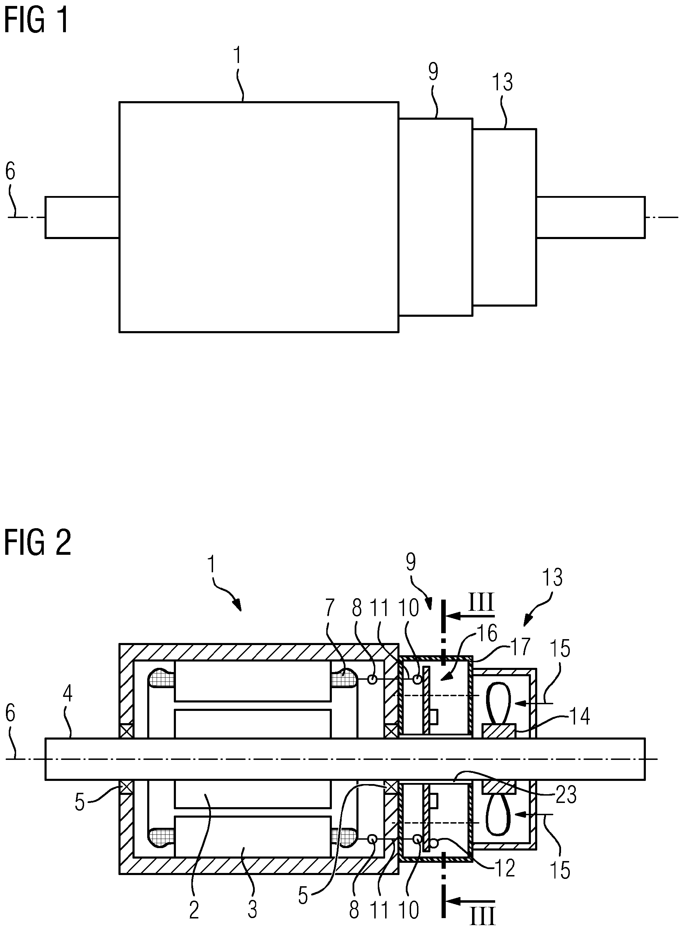

Gemäß den FIG 1 und 2 weist eine Maschinenanordnung zumindest eine elektrische Maschine 1 auf. Die elektrische Maschine 1 ist als rotatorische elektrische Maschine ausgebildet. Sie weist also einen Rotor 2 und einen Stator 3 auf. Der Rotor 2 ist drehfest auf einer Rotorwelle 4 angeordnet. Die Rotorwelle 4 ist in Lagern 5 gelagert und dadurch um eine Rotationsachse 6 rotierbar. Zusammen mit der Rotorwelle 4 rotiert auch der Rotor 2, und zwar jeweils um den gleichen Drehwinkel wie die Rotorwelle 4. Die Bauart der elektrischen Maschine 1 kann nach Bedarf sein. Vorzugsweise ist die elektrische Maschine 1 als permanenterregte Synchronmaschine, als Induktionsmaschine oder als Reluktanzmaschine ausgebildet.

Soweit nachfolgend die Begriffe "axial", "radial" und "tangential" verwendet werden, sind sie stets auf die Rotationsachse 6 bezogen. "Axial" bezeichnet eine Richtung parallel zur Rotationsachse 6. "Radial" bezeichnet eine Richtung in einer orthogonal zur Rotationsachse 6 orientierten Ebene direkt auf die Rotationsachse 6 zu oder von ihr weg. "Tangential" bezeichnet eine Richtung, die innerhalb der orthogonal zur Rotationsachse 6 orientierten Ebene orthogonal zur Radialrichtung orientiert ist. "Tangential" bezeichnet also eine Richtung, die bei einer konstanten Axialposition in einem konstanten radialen Abstand von der Rotationsachse 6 kreisförmig um die Rotationsachse 6 herum gerichtet ist.

Der Stator 3 weist ein Statorwicklungssystem 7 auf. Das Statorwicklungssystem 7 ist in Nuten des Stators 3 angeordnet. Die Nuten sind in den FIG nicht dargestellt. Vom Statorwicklungssystem 7 sind in FIG 2 nur die beiden Wicklungsköpfe an den beiden axialen Enden der elektrischen Maschine 1 erkennbar.

Das Statorwicklungssystem 7 weist an einem axialen Ende der elektrischen Maschine 1 maschinenseitige Anschlüsse 8 auf. Die maschinenseitigen Anschlüsse 8 dienen dem Zuführen von Betriebsströmen zum Statorwicklungssystem 7. Das entsprechende axiale Ende, also das axiale Ende, an dem das Statorwicklungssystem 7 die maschinenseitigen Anschlüsse 8 aufweist, wird nachstehend als Anschlussende bezeichnet.

Gemäß den FIG 1 und 2 weist die Maschinenanordnung weiterhin einen Umrichter 9 auf. Der Umrichter 9 weist umrichterseitige Anschlüsse 10 auf. Die umrichterseitigen Anschlüsse 10 und die maschinenseitigen Anschlüsse 8 sind elektrisch miteinander verbunden, beispielsweise über Verbindungsleitungen 11. Die Betriebsströme werden den maschinenseitigen Anschlüssen 8 somit über die umrichterseitigen Anschlüsse 10 zugeführt. Der Umrichter 9 weist weiterhin Versorgungsanschlüsse 12 auf. Mittels der Versorgungsanschlüsse 12 kann dem Umrichter 9 - beispielsweise aus einem Versorgungsnetz - elektrische Energie zugeführt werden. Das Versorgungsnetz ist in den FIG nicht mit dargestellt, da die Art und Weise, auf welche der Umrichter 9 mit elektrischer Energie versorgt wird, im Rahmen der vorliegenden Erfindung von untergeordneter Bedeutung ist. Entscheidend ist hingegen, dass der Umrichter 9 am Anschlussende der elektrischen Maschine 1 angeordnet ist. Der Umrichter 9 kann am Anschlussende der elektrischen Maschine 1 insbesondere über Verbindungselemente befestigt sein, beispielsweise über gestrichelt angedeutete Schraubbolzen.

In vielen Fällen weist die Maschinenanordnung zusätzlich zur elektrischen Maschine 1 und zum Umrichter 9 einen Lüfter 13 auf. Der Lüfter 13 weist seinerseits ein Lüfterrad 14 auf, mittels dessen Luft 15 zumindest durch die elektrische Maschine 1, meist auch durch den Umrichter 9 gefördert wird. Wenn der Lüfter 13 vorhanden ist, ist der Lüfter 13 in der Regel ebenfalls am Anschlussende der elektrischen Maschine 1 angeordnet. Vorzugsweise ist in diesem Fall entsprechend der Darstellung in den FIG 1 und 2 der Umrichter 9 zwischen der elektrischen Maschine 1 und dem Lüfter 13 angeordnet. In Einzelfällen kann aber auch der Lüfter 13 zwischen der elektrischen Maschine 1 und dem Umrichter 9 angeordnet sein. Auch hier ist beispielsweise wieder eine Schraubverbindung möglich (nicht dargestellt). Das Lüfterrad 14 kann mit der Rotorwelle 4 drehfest verbunden sein. Es sind jedoch auch Ausgestaltungen möglich, bei denen das Lüfterrad 14 mittels eines eigenen Antriebs unabhängig von dem Rotor 2 und der Rotorwelle 4 der elektrischen Maschine 1 rotiert wird.

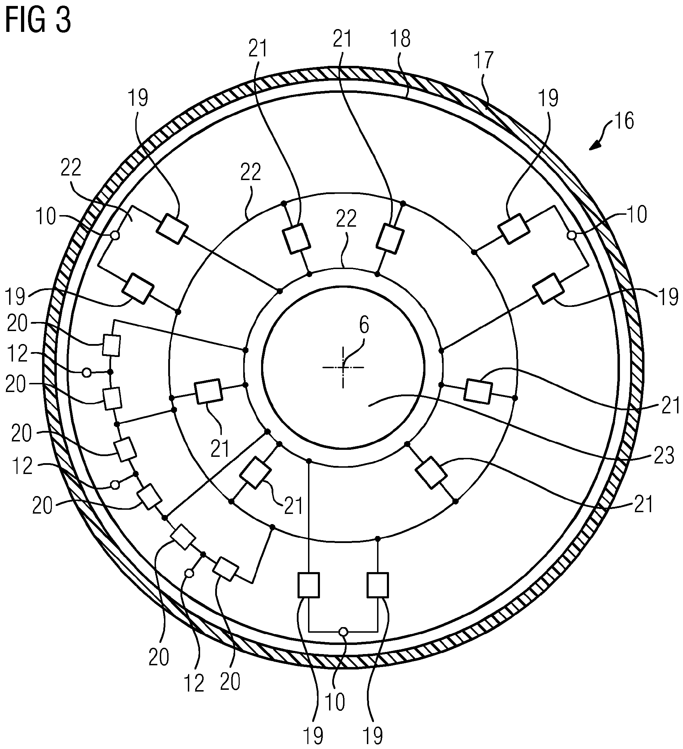

Der Umrichter 9 weist entsprechend der Darstellung in FIG 2 eine Umrichterschaltung 16 und ein Umrichtergehäuse 17 auf. Die Umrichterschaltung 16 ist im Umrichtergehäuse 17 angeordnet. Die Umrichterschaltung 16 umfasst entsprechend der Darstellung in FIG 3 in der Regel einen Schaltungsträger 18, auf dem die elektrisch wirksamen Komponenten des Umrichters 9 angeordnet sind, beispielsweise elektronische Schaltelemente 19, Gleichrichterelemente 20 und Kondensatorelemente 21. Die Elemente 19, 20 und 21 sind über elektrische Leitungen 22 miteinander verbunden. Von den elektrischen Leitungen 22 sind in FIG 3 nur einige wenige rein exemplarisch mit ihrem Bezugszeichen versehen. Die elektrischen Leitungen 22 können beispielsweise als auf dem Schaltungsträger 18 angeordnete Leiterbahnen ausgebildet sein. Auch die umrichterseitigen Anschlüsse 10 und die Versorgungsanschlüsse 12 können Bestandteile der Umrichterschaltung 16 sein. Der elektrotechnische Aufbau des Umrichters 9, die Verschaltung der einzelnen Komponenten des Umrichters 9 und der Betrieb des Umrichters 9 sind Fachleuten wohl bekannt und müssen daher nicht im Detail erläutert werden.

Entsprechend der Darstellung in FIG 3 sind auf dem Schaltungsträger 18 nicht nur die elektronischen Schaltelemente 19 selbst angeordnet, welche die dem Statorwicklungssystem 7 zugeführten Betriebsströme schalten, sondern zusätzlich auch die vorgeordneten Kondensatorelemente 21 und die diesen vorgeordneten Gleichrichterelemente 20. Es wäre aber auch möglich, die Gleichrichterelemente 20 oder die Gleichrichterelemente 20 und die Kondensatorelemente 21 außerhalb des Umrichters anzuordnen, beispielsweise in einem Klemmenkasten (nicht dargestellt). Als Umrichter 9 im Sinne der vorliegenden Erfindung wird also diejenige Einheit bezeichnet, welche die elektronischen Schaltelemente 19 aufweist, welche die dem Statorwicklungssystem 7 zugeführten Betriebsströme schalten. Vorzugsweise weist diese Einheit auch die Kondensatorelemente 21 und besonders vorzugsweise weiterhin auch die Gleichrichterelemente 20 auf. Zwingend ist dies aber nicht erforderlich.

Vorzugsweise sind entsprechend der Darstellung in FIG 3 die umrichterseitigen Anschlüsse 10 gleichmäßig um die Rotationsachse 6 herum verteilt angeordnet. Insbesondere in dem typischen Fall, dass das Statorwicklungssystem 7 dreiphasig ausgebildet ist, sind entsprechend der Darstellung in FIG 3 drei umrichterseitige Anschlüsse 10 vorhanden, die bezüglich der Rotationsachse 6 jeweils um 120° versetzt angeordnet sind. Ein radialer Abstand der umrichterseitigen Anschlüsse 10 von der Rotationsachse 6 ist in der Regel einheitlich für alle umrichterseitigen Anschlüsse 10 derselbe.

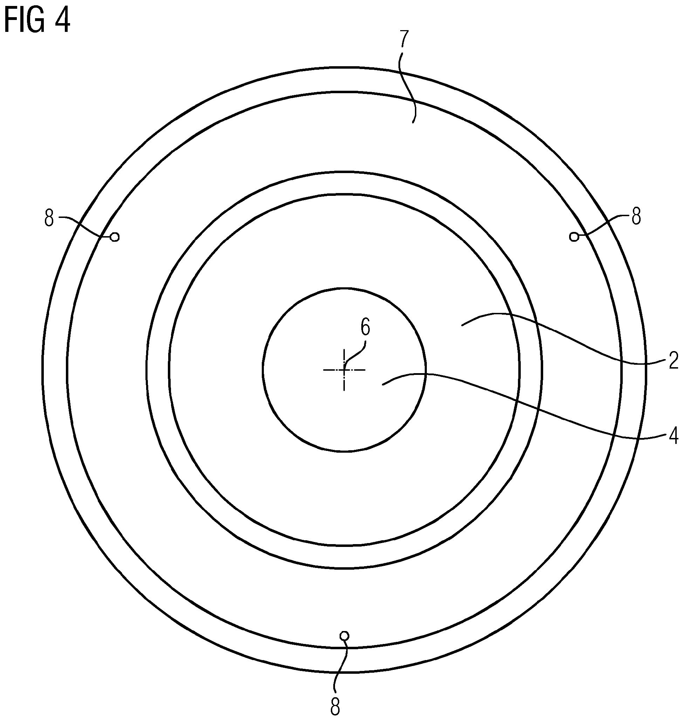

Entsprechend der Darstellung in FIG 4 sind vorzugsweise auch die maschinenseitigen Anschlüsse 8 gleichmäßig um die Rotationsachse 6 herum verteilt angeordnet. Insbesondere stimmt die Anzahl an maschinenseitigen Anschlüssen 8 vorzugsweise 1:1 mit der Anzahl an umrichterseitigen Anschlüssen 10 überein. Es ist daher eine 1:1-Verbindung der maschinenseitigen Anschlüsse 8 mit den umrichterseitigen Anschlüssen 10 möglich. Weiterhin ist ein radialer Abstand der maschinenseitigen Anschlüsse 8 von der Rotationsachse 6 vorzugsweise einheitlich für alle maschinenseitigen Anschlüsse 8 derselbe. Auch stimmt vorzugsweise der radiale Abstand der maschinenseitigen Anschlüsse 8 mit dem radialen Abstand der umrichterseitigen Anschlüsse 10 überein oder unterscheidet sich von diesem nur geringfügig (beispielsweise um maximal 10%). Dadurch ist es möglich, dass die Verbindungsleitungen 11 direkt, d.h. im wesentlichen rein axial, verlaufen.

Im Einzelfall ist es möglich, dass die Rotorwelle 4 sich in Axialrichtung gesehen nicht in den Bereich des Umrichters 9 hinein erstreckt. In vielen Fällen ist dies jedoch der Fall und manchmal sogar zwingend erforderlich. In diesem Fall weist der Umrichter 9 eine Mittenausnehmung 23 für den Durchtritt der Rotorwelle 4 auf. Dies gilt gleichermaßen für das Umrichtergehäuse 17 als auch für den im Umrichtergehäuse 17 angeordneten Schaltungsträger 18.

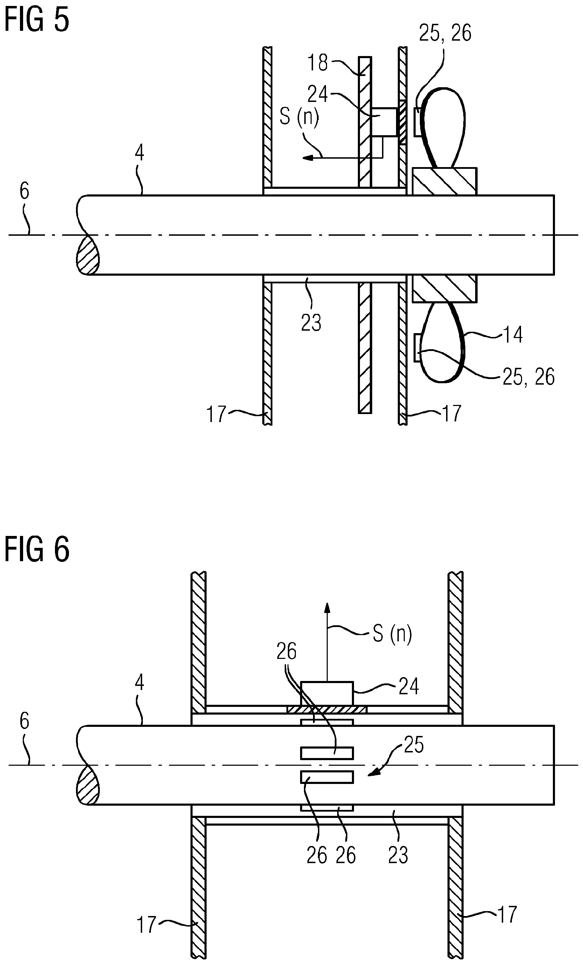

In einer bevorzugten Ausgestaltung weist die Maschinenanordnung entsprechend der Darstellung in FIG 5 einen Sensor 24 auf. Der Sensor 24 ist im Umrichtergehäuse 17 angeordnet. Er tastet eine Maßverkörperung 25 ab, die ebenfalls Bestandteil der Maschinenanordnung ist, jedoch zusammen mit dem Rotor 2 rotiert. Der Sensor 24 ist damit in der Lage, ein Sensorsignal S abzugeben, aufgrund dessen eine Drehzahl n der Rotorwelle 4 ermittelbar ist. Beispielsweise ist es möglich, dass das Sensorsignal S die Drehstellung der Rotorwelle 4 widerspiegelt, so dass aus dem Sensorsignal S durch zeitliche Ableitung die Drehzahl ermittelt werden kann. Vorzugsweise ist jedoch bereits das Sensorsignal S selbst proportional zur Drehzahl n der Rotorwelle 4.

Der Sensor 24 kann innerhalb des Umrichtergehäuses 17 beispielsweise auf dem Schaltungsträger 18 angeordnet sein. Weiterhin ist innerhalb des Umrichtergehäuses 17 so wie oben stehend erläutert auch die Umrichterschaltung 16 angeordnet. In FIG 5 ist von der Umrichterschaltung 16 jedoch nur der Schaltungsträger 18 dargestellt, um FIG 5 nicht mit Details zu überfrachten.

Im Falle der Ausgestaltung von FIG 5 ist die Maßverkörperung 25 auf dem Lüfterrad 14 angeordnet. In diesem Fall muss der Lüfter 13 vorhanden sein und muss das Lüfterrad 14 drehfest mit der Rotorwelle 4 verbunden sein.

FIG 6 zeigt eine zu FIG 5 alternative Ausgestaltung. Der Unterschied besteht darin, dass im Falle der Ausgestaltung gemäß FIG 6 die Maßverkörperung 25 nicht auf dem Lüfterrad 14 angeordnet ist, sondern auf der Rotorwelle 4. Die Rotorwelle 4 muss sich in diesem Fall in Axialrichtung zumindest bis auf Höhe des Sensors 24 erstrecken, da die Maßverkörperung 25 in diesem Bereich angeordnet ist. Daher ist es im Falle der Ausgestaltung gemäß FIG 6 zwar möglich, aber nicht zwingend erforderlich, dass der Lüfter 13 vorhanden ist. Falls der Lüfter 13 vorhanden ist, ist es weiterhin zwar möglich, aber nicht zwingend erforderlich, dass das Lüfterrad 14 drehfest mit der Rotorwelle 4 verbunden ist. Im übrigen sind die obigen Ausführungen zur Ausgestaltung gemäß FIG 5 in analoger Weise auch für die Ausgestaltung gemäß FIG 6 gültig.

Die Maßverkörperung 25 weist entsprechend der Darstellung in den FIG 5 und 6 um die Rotationsachse 6 herum gesehen mehrere Verkörperungselemente 26 auf. Beispielsweise können die Verkörperungselemente 26 als schmale Streifen ausgebildet sein, die einzeln an dem Lüfterrad 14 oder auf der Rotorwelle 4 befestigt sind. Es sind aber auch andere Ausgestaltungen möglich.

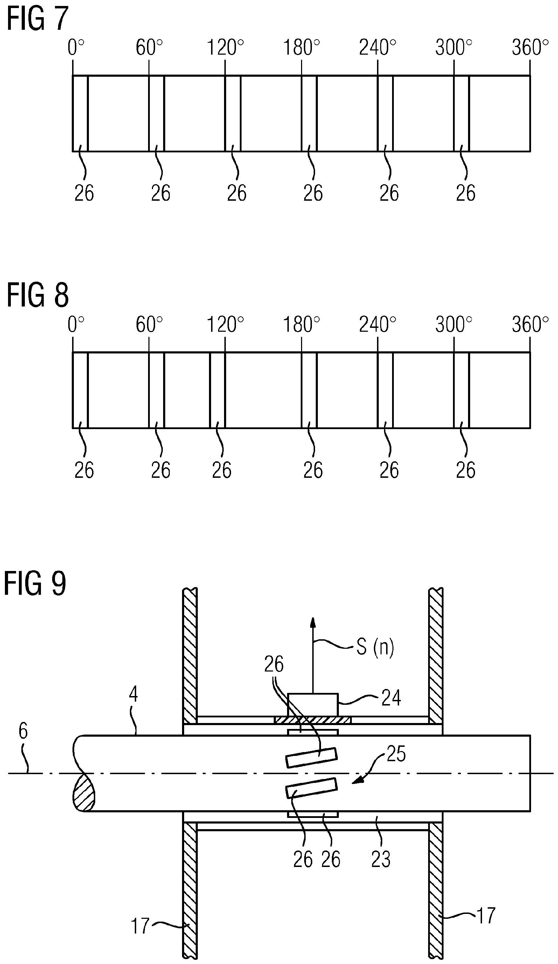

FIG 7 zeigt eine mögliche Anordnung der Verkörperungselemente 26 in abgerollter Darstellung. Entsprechend der Darstellung in FIG 7 sind insgesamt sechs Verkörperungselemente 26 vorhanden. Diese Anzahl ist jedoch rein beispielhaft. Es könnten auch mehr oder weniger Verkörperungselemente 26 vorhanden sein. Entsprechend der Darstellung in FIG 7 sind die Verkörperungselemente 26 um die Rotationsachse 6 herum gesehen gleichmäßig verteilt angeordnet. Wenn mit k die Anzahl an Verkörperungselementen 26 bezeichnet wird, sind die Verkörperungselemente 26 also in Tangentialrichtung um 360°/k voneinander beabstandet. Im konkreten Beispiel von FIG 7 sind die Verkörperungselemente 26 somit in Tangentialrichtung um jeweils 60° voneinander beabstandet.

FIG 8 zeigt eine zu FIG 7 alternative Ausgestaltung. Bei der Ausgestaltung gemäß FIG 8 sind die Verkörperungselemente 26 um die Rotationsachse 6 herum gesehen ungleichmäßig verteilt angeordnet. Beispielsweise kann eines der Verkörperungselemente 26 in Tangentialrichtung etwas versetzt angeordnet sein, so dass dieses eine Verkörperungselement 26 zu seinen beiden benachbarten Verkörperungselementen 26 jeweils einen Winkelversatz aufweist, der einmal größer und einmal kleiner als 360°/k ist, wobei mit k wieder die Anzahl an Verkörperungselementen 26 bezeichnet ist. Bei den anderen Verkörperungselementen 26 beträgt der Abstand voneinander vorzugsweise jeweils 360°/k. In dem konkreten Beispiel von FIG 8, bei dem insgesamt sechs Verkörperungselemente 26 vorhanden sind, können beispielsweise vier der Winkelabstände jeweils 60° betragen, während die beiden verbleibenden Winkelabstände 50° und 70° betragen. Die genannten Zahlenwerte sind jedoch nur rein beispielhaft und dienen der Veranschaulichung des Prinzips. Unabhängig von den konkreten Zahlenwerten ist durch die entsprechende Modulation des Sensorsignals S bei einer konstanten bzw. im wesentlichen konstanten Drehzahl eine Erkennung der Drehrichtung des Rotors 2 der elektrischen Maschine 1 möglich.

Die Verkörperungselemente 26 können gemäß FIG 9 erhaben ausgebildet sein. In diesem Fall kann es von Vorteil sein, wenn die Verkörperungselemente 26 spiralförmig um die Rotationsachse 6 umlaufen. Dadurch können die Verkörperungselemente 26 - gegebenenfalls als Unterstützung zu dem Lüfterrad 14 - die Luft 15 aktiv durch die elektrische Maschine 1 fördern. Die Ausgestaltung gemäß FIG 9 ist jedoch - zumindest in der Regel - nur dann sinnvoll, wenn die Drehrichtung der elektrischen Maschine 1 stets dieselbe ist.

Der Sensor 24 arbeitet vorzugsweise nach einem magnetischen Prinzip. Entsprechende Prinzipien sind Fachleuten allgemein bekannt und müssen daher nicht im Detail erläutert werden. Um eine ordnungsgemäße Erfassung durch den Sensor 24 zu gewährleisten, sollte das Umrichtergehäuse 17 jedoch zumindest im Bereich zwischen dem Sensor 24 und der Maßverkörperung 25 aus einem unmagnetischen Material bestehen, beispielsweise aus einem Kunststoff. Dies ist in den FIG 5, 6 und 9 durch eine entsprechende Schraffur des Umrichtergehäuses 17 im entsprechenden Bereich angedeutet.

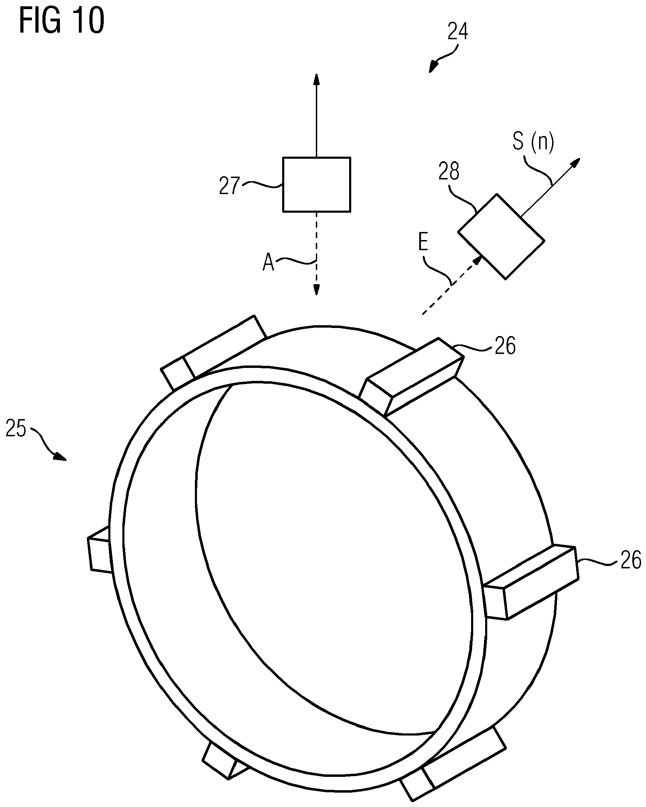

Entsprechend der Darstellung in FIG 10 kann der Sensor 24 ein Anregungselement 27 und ein Empfangselement 28 aufweisen. In diesem Fall besteht die Maßverkörperung 25 bzw. bestehen die Verkörperungselemente 26 aus einem magnetisierbaren, aber nicht permanentmagnetischen Material. Die Maßverkörperung 25 kann im Rahmen der Ausgestaltung gemäß FIG 10 beispielsweise als Ringjoch ausgebildet sein, von dem ausgehend die einzelnen Verkörperungselemente 26 in Form von nach radial außen ragenden Zähnen abstehen. Derartige Materialien sind Fachleuten allgemein bekannt. Im Falle der Ausgestaltung gemäß FIG 10 wird die Maßverkörperung 25 bzw. werden die Verkörperungselemente 26 von dem Anregungselement 27 mittels eines Anregungssignals A magnetisiert. Das Empfangselement 28 empfängt aufgrund der Magnetisierung der Maßverkörperung 25 durch das Anregungssignal A ein Empfangssignal E. Das Empfangssignal E ist, wenn der Rotor 2 rotiert, entsprechend moduliert. Das Empfangselement 28 ist dadurch in der Lage, anhand des Empfangssignals E das Sensorsignal S zu ermitteln.

Zusammengefasst betrifft die vorliegende Erfindung somit folgenden Sachverhalt:

Eine Maschinenanordnung weist eine elektrische Maschine 1 auf, die einen Rotor 2 und einen Stator 3 aufweist. Der Rotor 2 ist drehfest auf einer Rotorwelle 4 angeordnet, die um eine Rotationsachse 6 rotierbar ist. Der Stator 3 weist ein Statorwicklungssystem 7 auf, das an einem axialen Ende der elektrischen Maschine 1 maschinenseitige Anschlüsse 8 zum Zuführen von Betriebsströmen zum Statorwicklungssystem 7 aufweist. Die Maschinenanordnung weist weiterhin einen Umrichter 9 auf, der umrichterseitige Anschlüsse 10 aufweist. Die maschinenseitigen Anschlüsse 8 und die umrichterseitigen Anschlüsse 10 sind elektrisch miteinander verbunden. Der Umrichter 9 ist an demjenigen axialen Ende der elektrischen Maschine 1 angeordnet, an dem das Statorwicklungssystem 7 die maschinenseitigen Anschlüsse 8 aufweist.

Die vorliegende Erfindung weist viele Vorteile auf. Bereits im Rahmen der Basisausgestaltung der vorliegenden Erfindung können die maschinenseitigen und umrichterseitigen Anschlüsse 8, 10 direkt miteinander verbunden werden. Die hierfür erforderlichen Verbindungsleitungen 11 können sehr kurz gehalten und direkt geführt werden. Die "Schaltseite" der elektrischen Maschine 1 kann entfallen. Die Luft 15 kann, sofern der Lüfter 13 vorhanden ist, zunächst durch das Umrichtergehäuse 17 geführt werden und so zunächst die Umrichterschaltung 16 kühlen und erst danach die elektrische Maschine 1 kühlen. Dies ist von Vorteil, weil die Kühlung der Umrichterschaltung 16 in der Regel kritischer ist als die Kühlung der elektrischen Maschine 1. Weiterhin stellt die erfindungsgemäße Maschinenanordnung eine kostengünstige Lösung dar. Mittels des Sensors 24 und der Maßverkörperung 25 ist auf einfache Weise eine Erfassung der Drehzahl n der elektrischen Maschine 1 möglich. Dadurch ist ein stabiler Betrieb der elektrischen Maschine 1 auch mit einer kleinen Drehzahl n möglich, ohne einen teuren Lage- oder Drehzahlgeber zu benötigen. Drehstellung oder Drehzahl n und Drehmoment können genau eingestellt werden. Drehzahlschwankungen können auf ein Minimum begrenzt werden. Aufgrund der Anordnung des Sensors 24 und der Maßverkörperung 25 wird weiterhin die Baulänge der Maschinenanordnung nicht vergrößert. Der anderenfalls erforderliche Bauraum für den Lage- oder Drehzahlgeber kann im Rahmen der vorliegenden Erfindung für den Umrichter 9 genutzt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Maschinenanordnung,
- wobei die Maschinenanordnung eine elektrische Maschine (1) aufweist,
- wobei die elektrische Maschine (1) einen Rotor (2) und einen Stator (3) aufweist,
- wobei der Rotor (2) drehfest auf einer Rotorwelle (4) angeordnet ist und die Rotorwelle (4) um eine Rotationsachse (6) rotierbar ist,
- wobei der Stator (3) ein Statorwicklungssystem (7) aufweist,
- wobei das Statorwicklungssystem (7) an einem axialen Ende der elektrischen Maschine (1) maschinenseitige Anschlüsse (8) zum Zuführen von Betriebsströmen zum Statorwicklungssystem (7) aufweist,
- wobei die Maschinenanordnung einen Umrichter (9) aufweist, der umrichterseitige Anschlüsse (10) aufweist,
- wobei die maschinenseitigen Anschlüsse (8) und die umrichterseitigen Anschlüsse (10) elektrisch miteinander verbunden sind,
**dadurch gekennzeichnet, dass** der Umrichter (9) an demjenigen axialen Ende der elektrischen Maschine (1) angeordnet ist, an dem das Statorwicklungssystem (7) die maschinenseitigen Anschlüsse (8) aufweist.

2. Maschinenanordnung nach Anspruch 1, **dadurch gekennzeichnet, dass** die maschinenseitigen Anschlüsse (8) gleichmäßig um die Rotationsachse (6) herum verteilt angeordnet sind und dass die umrichterseitigen Anschlüsse (10) ebenfalls gleichmäßig um die Rotationsachse (6) herum verteilt angeordnet sind.

3. Maschinenanordnung nach Anspruch 1 oder 2, **dadurch gekennzeichnet, dass** der Umrichter (9) eine Mittenausnehmung (23) für den Durchtritt der Rotorwelle (4) aufweist.

4. Maschinenanordnung nach Anspruch 1, 2 oder 3, **dadurch gekennzeichnet, dass** die elektrische Maschine (1) als permanenterregte Synchronmaschine, als Induktionsmaschine oder als Reluktanzmaschine ausgebildet ist.

5. Maschinenanordnung nach einem der obigen Ansprüche, **dadurch gekennzeichnet, dass** die Maschinenanordnung einen Lüfter (13) mit einem Lüfterrad (14) aufweist und dass der Lüfter (13) ebenfalls an demjenigen axialen Ende der elektrischen Maschine (1) angeordnet ist, an dem das Statorwicklungssystem (7) die maschinenseitigen Anschlüsse (8) aufweist.

6. Maschinenanordnung nach Anspruch 5, **dadurch gekennzeichnet, dass** der Umrichter (9) zwischen der elektrischen Maschine (1) und dem Lüfter (13) angeordnet ist.

7. Maschinenanordnung nach Anspruch 5 oder 6, **dadurch gekennzeichnet,**
- **dass** die Maschinenanordnung einen Sensor (24) und eine von dem Sensor (24) abgetastete Maßverkörperung (25) aufweist, so dass aufgrund eines von dem Sensor (24) abgegebenen Sensorsignals (S) eine Drehzahl (n) der Rotorwelle (4) ermittelbar ist,
- **dass** der Umrichter (9) eine Umrichterschaltung (16) und ein Umrichtergehäuse (17) aufweist,
- **dass** sowohl die Umrichterschaltung (16) als auch der Sensor (24) im Umrichtergehäuse (17) angeordnet sind,
- **dass** das Lüfterrad (14) drehfest mit der Rotorwelle (4) verbunden ist und
- **dass** die Maßverkörperung (25) auf dem Lüfterrad (14) angeordnet ist.

8. Maschinenanordnung nach einem der Ansprüche 1 bis 6, **dadurch gekennzeichnet,**
- **dass** die Maschinenanordnung einen Sensor (24) und eine von dem Sensor (24) abgetastete Maßverkörperung (25) aufweist, so dass aufgrund eines von dem Sensor (24) abgegebenen Sensorsignals (S) eine Drehzahl (n) der Rotorwelle (4) ermittelbar ist,
- **dass** der Umrichter (9) eine Umrichterschaltung (16) und ein Umrichtergehäuse (17) aufweist,
- **dass** sowohl die Umrichterschaltung (16) als auch der Sensor (24) im Umrichtergehäuse (17) angeordnet sind und
- **dass** die Maßverkörperung (25) auf der Rotorwelle (4) angeordnet ist.

9. Maschinenanordnung nach Anspruch 8, **dadurch gekennzeichnet, dass** die Maßverkörperung (25) um die Rotationsachse (6) herum gesehen mehrere Verkörperungselemente (26) aufweist, dass die Verkörperungselemente (26) erhaben ausgebildet sind und dass die Verkörperungselemente (26) spiralförmig um die Rotationsachse (6) umlaufen.

10. Maschinenanordnung nach Anspruch 7, 8 oder 9, **dadurch gekennzeichnet, dass** die Maßverkörperung (25) um die Rotationsachse (6) herum gesehen mehrere Verkörperungselemente (26) aufweist und dass die Verkörperungselemente (26) um die Rotationsachse (6) herum gesehen gleichmäßig oder ungleichmäßig verteilt angeordnet sind.

11. Maschinenanordnung nach einem der Ansprüche 7 bis 10, **dadurch gekennzeichnet, dass** der Sensor (24) als nach einem magnetischen Prinzip arbeitender Sensor ausgebildet ist und dass das Umrichtergehäuse (17) zumindest im Bereich zwischen dem Sensor (24) und der Maßverkörperung (25) aus einem unmagnetischen Material besteht.

12. Maschinenanordnung nach Anspruch 11, **dadurch gekennzeichnet,**
- **dass** der Sensor (24) ein Anregungselement (27) und ein Empfangselement (28) aufweist,
- **dass** die Maßverkörperung (25) aus einem magnetisierbaren, aber nicht permanentmagnetischen Material besteht,
- **dass** die Maßverkörperung (25) mittels des Anregungselementes (27) magnetisiert wird,
- **dass** mittels des Empfangselements (28) ein Empfangssignal (E) empfangen wird und
- **dass** das Empfangselement (28) das Sensorsignal (S) anhand des Empfangssignals (E) ermittelt.

13. Maschinenanordnung nach einem der obigen Ansprüche, **dadurch gekennzeichnet, dass** der Umrichter (9) zumindest diejenigen elektronischen Schaltelemente (19) aufweist, welche die dem Statorwicklungssystem (7) zugeführten Betriebsströme schalten.

14. Maschinenanordnung nach Anspruch 13, **dadurch gekennzeichnet, dass** der Umrichter (9) zusätzlich zu den elektronischen Schaltelemente (19) den elektronischen Schaltelementen (19) vorgeordnete Elemente (20, 21) aufweist, insbesondere Gleichrichterelemente (20) und/oder Kondensatorelemente (21).
